(19) Europäisches Patentamt
European Patent Office
Office européen des brevets

(11) Veröffentlichungsnummer: **0 126 406**
**A2**

(12) # EUROPÄISCHE PATENTANMELDUNG

(21) Anmeldenummer: **84105476.0**

(22) Anmeldetag: **14.05.84**

(51) Int. Cl.³: **C 09 B 67/22**, C 09 B 29/085

(30) Priorität: **20.05.83 DE 3318451**

(43) Veröffentlichungstag der Anmeldung: **28.11.84**
**Patentblatt 84/48**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Degen, Helmut, Wildstrasse 32, D-6710 Frankenthal (DE)**
Erfinder: **Hansen, Günter, Dr., Alwin-Mittasch-Platz 8, D-6700 Ludwigshafen (DE)**
Erfinder: **Kralimann, Reinhold, Bachweg 2, D-6719 Weisenheim (DE)**
Erfinder: **Weber, Hans, Im Wachtelschlag 33, D-6733 Hassloch (DE)**

(54) **Farbstoffmischungen.**

(57) Die Erfindung betrifft Mischungen von Farbstoffen der Formel I

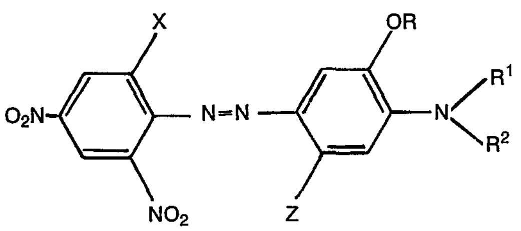

I,

in der
X Chlor oder Brom,
Z Wasserstoff, Methyl, Ethyl, $C_1$- bis $C_4$-Alkoxy oder Acetylamino,
R $C_1$- bis $C_4$-Alkyl,
$R^1$ und $R^2$ unabhängig voneinander Allyl, Methallyl oder gegebenenfalls durch Hydroxy, $C_1$- bis $C_4$-Alkoxy oder Alkanoyloxy substituiertes $C_1$- bis $C_6$-Alkyl oder zusammen mit dem Stickstoff Morpholino oder Tetra-, Penta- oder Hexamethylenimino sind und einer der Reste $R^1$ und $R^2$ auch Wasserstoff sein kann.

EP 0 126 406 A2

## Farbstoffmischungen

Die Erfindung betrifft Mischungen von Farbstoffen der Formel I

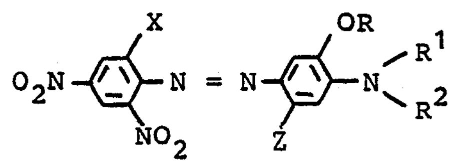

I ,

in der

X Chlor oder Brom,

Z Wasserstoff, Methyl, Ethyl, $C_1$- bis $C_4$-Alkoxy oder Acetylamino,

R $C_1$- bis $C_4$-Alkyl,

$R^1$ und $R^2$ unabhängig voneinander Allyl, Methally oder gegebenenfalls durch Hydroxy, $C_1$- bis $C_4$-Alkoxy oder Alkanoyloxy substituiertes $C_1$- bis $C_6$-Alkyl oder zusammen mit dem Stickstoff Morpholino oder Tetra-, Penta- oder Hexamethylenimino sind und einer der Reste $R^1$ und $R^2$ auch Wasserstoff sein kann.

Alkylreste $R^1$ und $R^2$ sind z.B. Pentyl oder Hexyl, insbesondere Propyl oder Butyl und vorzugsweise Methyl oder Ethyl, wobei n- und i-Reste eingeschlossen sind. Weiter sind Hydroxyethyl oder -propyl, Acetoxyethyl oder -propyl, Propionyloxyethyl oder -propyl oder Methoxy-, Ethoxy-, Propoxy- oder Butoxyethyl zu nennen.

Technisch besonders wertvoll als Mischungsbestandteil sind die Verbindungen der Formel

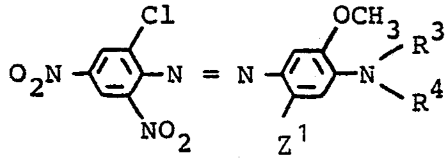

,

Bg/P

in denen $R^3$ und $R^4$ Methyl, Ethyl, Hydroxyethyl, Hydroxypropyl, Acetoxyethyl, Acetoxypropyl oder Allyl und $R^4$ darüberhinaus noch Wasserstoff sind und $Z^1$ Methyl, Methoxy, Ethoxy oder Acetylamino bedeutet.

Die Mischungen enthalten vorzugsweise 2 oder 3 verschiedene Farbstoffe, wobei die Zweiermischungen insbesondere 30 bis 70 : 70 bis 30 % der Farbstoffe und die Dreiermischungen mindestens 10 % von jedem und höchstens 80 % von einem Farbstoff enthalten.

Bevorzugt sind bei den Dreiermischungen solche, bei denen keine der Komponenten in Mengen unter 20 % vorliegt.

Die erfindungsgemäßen Mischungen können ferner in untergeordneten Mengen weitere Farbstoffe enthalten, die bei der Synthese aufgrund der in den Kupplungskomponenten enthaltenen Verunreinigungen entstehen.

Die erfindungsgemäßen Mischungen eignen sich zum Färben von Celluloseacetaten, wie 2 1/2- und Triacetat. Als Färbeverfahren eignen sich die für Dispersionsfarbstoffe üblichen Färbe- und Druckverfahren, die in den Beispielen näher erläutert sind.

Man erhält mit den erfindungsgemäßen Mischungen farbstarke Marineblaufärbungen mit vorzüglichen Naßechtheiten und guter Reib- und Stickoxidechtheit. Die Lichtechtheit ist begrenzt.

Da Celluloseacetate jedoch im wesentlichen als Futterstoffe verwendet werden, kann eine geringere Lichtechtheit in Kauf genommen werden.

Aus der japanischen Patentveröffentlichung 77/136275 ist die Verwendung von einigen Verbindungen der Formel I als Transfer-

farbstoffe für Polyester bekannt. Überraschenderweise erhält man mit den erfindungsgemäßen Mischungen auf Celluloseestern einwandfreie Färbungen und Drucke, wohingegen Einzelfarbstoffe und die Transferdruckmethode nur mangelhafte Ergebnisse liefern.

In den folgenden Beispielen beziehen sich Angaben über Teile und Prozente, sofern nicht anders vermerkt, auf das Gewicht.

Beispiel 1

21,7 Teile 2-Chlor-4,6-dinitroanilin wurden in 100 Teilen 96 %iger Schwefelsäure gelöst, bei 5 - 10 °C mit 32 Teilen Nitrosylschwefelsäure (11,5 % $N_2O_3$) diazotiert und 16 Stunden bei 10 - 15 °C nachgerührt. Eine Mischung aus 14,5 Teilen 2,5-Dimethoxy-N,N-diethylanilin, 5,9 Teilen 2,5-Dimethoxy-N-ethylanilin und 1 Teil Amidosulfonsäure wurde in einer Mischung aus 300 Teilen Wasser und 18,4 Teilen 96 %iger Schwefelsäure gelöst und mit 1000 Teilen Eis versetzt. Anschließend ließ man bei 0 - 5 °C die Diazoniumsalzlösung innerhalb einer Stunde zulaufen und trug während des Zulaufs insgesamt 250 Teile wasserfreies Natriumacetat ein. Nach beendeter Kupplung wurde die Farbstoffsuspension auf 60 °C erhitzt, der Farbstoff abfiltriert, mit Wasser neutral gewaschen und getrocknet. Man erhielt 32 Teile einer Farbstoffmischung bestehend aus 22,4 Teilen des Farbstoffs mit X = Chlor, $R^1 = R^2 = C_2H_5$ und 9,6 Teilen des Farbstoffs mit X = Chlor, $R^1 = H$, $R^2 = C_2H_5$.

Beispiel 2

23,3 Teile 2,5-Dimethoxy-N,N-diallylanilin wurden in einer Mischung aus 300 Teilen Wasser, 18,4 Teilen Schwefelsäure und 1000 Teilen Eis analog Beispiel 1 mit der Diazoniumsalzlösung aus 21,7 Teilen 2-Chlor-4,6-dinitroanilin unter Zugabe von 250 Teilen wasserfreiem Natriumacetat umgesetzt. Nach dem Filtrieren, Waschen und Trocknen erhielt man 39 Teile des Farbstoffs mit X=Chlor, $R=CH_3$, $Z=OCH_3$, $R^1=R^2=CH_2-CH=CH_2$, der mit 39 Teilen einer nach Beispiel 1 erhaltenen Farbstoffmischung in einer Kugelmühle zu 78 Teilen einer erfindungsgemäßen Farbstoffmischung bestehend aus 39 Teilen des Farbstoffs mit X = Chlor, $R = CH_3$, $Z = OCH_3$, $R^1 = R^2 = CH_2-CH=CH_2$, 27,3 Teilen des Farbstoffs mit X = Chlor, $R = CH_3$, $Z = OCH_3$, $R^1 = R^2 = C_2H_5$ und 11,7 Teilen des Farbstoffs mit X = Chlor, $R = CH_3$, $Z = OCH_3$, $R^1 = H$, $R^2 = C_2H_5$ vermahlen wurde.

Beispiel 3

a. 23 Teile N,N-Bisoxethyl-2-methoxy-5-methylanilin wurden in einer Mischung aus 250 Teilen Wasser, 50 Volumenteilen konz. Salzsäure, 100 Teilen Dimethylformamid und 1000 Teilen Eis mit einer analog Beispiel 1 aus 21,7 Teilen 2-Chlor-4,6-dinitroanilin bereiteten Diazoniumsalzlösung umgesetzt. Nach beendeter Kupplung wurde der Farbstoff abfiltriert, gewaschen und getrocknet. Man erhielt 42 Teile des Farbstoffs mit X = Chlor, R = Z = $CH_3$, $R^1 = R^2 = C_2H_4OH$.

b. 32 Teile N,N-Bisacetoxethyl-2-methoxy-5-methylanilin wurden analog Beispiel 3a. mit der Diazoniumsalzlösung aus 21,7 Teilen 2-Chlor-4,6-dinitroanilin umgesetzt. Man erhielt 52 Teile des Farbstoffs mit X = Chlor, R = Z = $CH_3$, $R^1 = R^2 = C_2H_4O\underset{\underset{O}{\|}}{C}CH_3$.

c. 50 Teile des gemäß Beispiel 3a. erhaltenen Farbstoffs wurden mit 50 Teilen des Farbstoffs aus Beispiel 3b. in einer Kugelmühle vermahlen. Die resultierende Farbstoffmischung ergibt auf 2 1/2 Acetat farbstarke marineblaue Färbungen mit insbesondere hervorragender Schweißechtheit.

Beispiel 4

21,7 Teile 2-Chlor-4,6-dinitroanilin wurden analog Beispiel 1 diazotiert und innerhalb 1 Stunde in eine Mischung aus 14,5 Teilen N,N-Dioxethyl-2-methoxy-5-acetylamino-anilin und 16,3 Teilen N,N-Bisacetoxethyl-2-methoxy-5-acetylamino-anilin in 250 Teilen Wasser, 50 Volumenteilen konz. Salzsäure, 100 Teilen Dimethylformamid und 1000 Teilen Eis gegeben. Nach Ende der Kupplung wurde der Farbstoff abgesaugt, neutral gewaschen und getrocknet. Man erhielt 50 Teile einer Farbstoffmischung bestehend aus 25 Teilen des Farbstoffs mit X = Chlor, R = $CH_3$, Z = $NHCOCH_3$, $R^1$ = $R^2$ = $C_2H_4OH$ und 25 Teilen des Farbstoffs der Formel I mit X = Chlor, R = $CH_3$, Z = $NHCOCH_3$, $R^1$ = $R^2$ = $C_2H_4OC(=O)CH_3$.

| Bsp. Nr. | Tle | X | R | Z | $R^1$ | $R^2$ |
|---|---|---|---|---|---|---|
| 5 | 50 | Cl | $CH_3$ | $OCH_3$ | $CH_2CH=CH_2$ | $CH_2CH=CH_2$ |
| | 40 | Cl | $CH_3$ | $OCH_3$ | H | $C_2H_5$ |
| | 10 | Cl | $CH_3$ | $OCH_3$ | $C_2H_5$ | $C_2H_5$ |
| 6 | 25 | Cl | $CH_3$ | $OCH_3$ | $CH_3$ | $CH_3$ |
| | 45 | Cl | $CH_3$ | $OCH_3$ | $C_2H_5$ | $C_2H_5$ |
| | 30 | Cl | $CH_3$ | $OCH_3$ | H | $C_2H_5$ |
| 7 | 20 | Br | $C_2H_5$ | $OC_2H_5$ | $CH_3$ | $CH_3$ |
| | 10 | Br | $C_2H_5$ | $OC_2H_5$ | H | $CH_3$ |
| | 70 | Cl | $CH_3$ | $OCH_3$ | $C_3H_7$(n) | $C_3H_7$(n) |
| 8 | 30 | Cl | $C_2H_5$ | $OC_2H_5$ | H | $CH_3$ |
| | 70 | Cl | $C_2H_5$ | $OC_2H_5$ | $CH_3$ | $CH_3$ |
| 9 | 40 | Cl | $CH_3$ | $OCH_3$ | H | $CH_3$ |
| | 60 | Cl | $CH_3$ | $OCH_3$ | $CH_3$ | $CH_3$ |
| 10 | 30 | Cl | $CH_3$ | $OCH_3$ | $CH_2CH=CH_2$ | $CH_2CH=CH_2$ |
| | 30 | Br | $CH_3$ | $OCH_3$ | H | $C_2H_5$ |
| | 40 | Br | $CH_3$ | $OCH_3$ | $C_2H_5$ | $C_2H_5$ |
| 11 | 60 | Cl | $CH_3$ | $OCH_3$ | 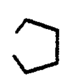 | |
| | 20 | Cl | $CH_3$ | $OCH_3$ | $C_2H_5$ | $C_2H_5$ |
| | 20 | Cl | $CH_3$ | $OCH_3$ | H | $C_2H_5$ |

| Bsp. Nr. | Tle | X | R | Z | $R^1$ | $R^2$ |
|---|---|---|---|---|---|---|
| 12 | 50 | Br | $CH_3$ | $CH_3$ | $C_2H_4O\overset{O}{\overset{\|}{C}}CH_3$ | $C_2H_4O\overset{O}{\overset{\|}{C}}CH_3$ |
| | 50 | Br | $CH_3$ | $OCH_3$ | $C_2H_4OH$ | $C_2H_4OH$ |
| 13 | 50 | Cl | $CH_3$ | $OCH_3$ | $C_2H_4OH$ | $C_2H_4OH$ |
| | 50 | Br | $CH_3$ | $OCH_3$ | $C_2H_4OH$ | $C_2H_4OH$ |
| 14 | 50 | Cl | $CH_3$ | $OCH_3$ | $C_2H_5$ | $C_2H_5$ |
| | 50 | Cl | $CH_3$ | $OCH_3$ | $C_2H_4OH$ | $C_2H_4OH$ |
| 15 | 60 | Cl | $CH_3$ | $CH_3$ | $C_2H_4OH$ | $C_2H_4OH$ |
| | 40 | Cl | $CH_3$ | $OCH_3$ | $C_2H_4OH$ | $C_2H_4OH$ |
| 16 | 70 | Cl | $CH_3$ | $OCH_3$ | $C_2H_5$ | $C_2H_5$ |
| | 10 | Cl | $CH_3$ | $OCH_3$ | H | $C_2H_5$ |
| | 20 | Cl | $CH_3$ | $CH_3$ | $C_2H_4OH$ | $C_2H_4OH$ |
| 17 | 30 | Cl | $CH_3$ | $NHCOCH_3$ | $C_2H_4O\overset{O}{\overset{\|}{C}}CH_3$ | $C_2H_4O\overset{O}{\overset{\|}{C}}CH_3$ |
| | 70 | Cl | $CH_3$ | $NHCOCH_3$ | $C_2H_4OH$ | $C_2H_4OH$ |

Färbebeispiele auf 2 1/2-Acetat

a. 100 Teile eines Garns aus Cellulose-2 1/2-acetat färbt man 60 Minuten bei 85 °C in einem Bad, das 2000 Teile Wasser, 1,5 Teile der feinverteilten Farbstoffmischung aus Beispiel 1 und 3 Teile des Umsetzungsproduktes aus 1 Mol Rizinusöl und 40 Mol Ethylenoxid enthält.

Man erhält eine tiefe Marineblaufärbung mit guter Reibechtheit und Stickoxidechtheit und vorzüglichen Naßechtheitseigenschaften.

b. 100 Teile eines Gewebes aus Cellulose-2 1/2-acetat färbt man 60 Minuten bei 85 °C in einem Bad, das 2000 Teile Wasser, 1 Teil des feinverteilten Farbstoffs gemäß Beispiel 3a. und 3 Teile des Umsetzungsproduktes aus 1 Mol Rizinusöl und 40 Mol Ethylenoxid enthält. Es wird eine Marineblaufärbung mit guter Reib- und Stickoxidechtheit sowie mit sehr guten Naßechtheitseigenschaften erhalten.

c. 100 Teile eines Garns aus Cellulose-2 1/2-acetat färbt man 60 Minuten bei 85 °C in einem Bad, das 2000 Teile Wasser, 1 Teil der Farbstoffmischung aus Beispiel 3c. sowie 3 Teile des Umsetzungsproduktes aus 1 Mol Rizinusöl und 40 Mol Ethylenoxid enthält. Die marineblaue Färbung ist gut reib- und stickoxidecht und zeichnet sich durch sehr gute Naßechtheiten aus.

d. 100 Teile eines Gewebes aus Cellulose-2 1/2-acetat färbt man 60 Minuten bei 85 °C in einem Bad, das 2000 Teile Wasser, 1,3 Teile der feinverteilten Farbstoffmischung aus Beispiel 17 sowie 3 Teile des Umsetzungsproduktes aus 1 Mol Rizinusöl und 40 Mol Ethylenoxid enthält. Die Marineblaufärbung weist außer sehr guten Naßechtheitseigenschaften gute Reib- und Stickoxidechtheiten auf.

Färbebeispiel auf Triacetat

100 Teile eines Triacetatgewebes werden in einer Färbeflotte behandelt, die 1000 Teile Wasser, 1,0 Teile der feinverteilten Farbstoffmischung aus Beispiel 5 und 0,75 Teile des durch Anlagerung von 50 Mol Ethylenoxid an 1 Mol Spermölalkohol und anschließendes Sulfonieren erhaltenen Produktes enthält. Nach Einstellung eines pH-Wertes von 5,0 mit 30 %iger Essigsäure beginnt man mit dem Färben bei 50 - 60 °C, erhöht innerhalb von 30 Minuten auf 120 °C und färbt noch weitere 60 Minuten bei dieser Temperatur. Man erhält eine dunkelblaue Färbung mit ausgezeichneten Naßechtheitseigenschaften, insbesondere sehr guter Schweiß- und Waschechtheit.

Druckbeispiel auf 2 1/2-Acetat

Ein Gewebe aus 2 1/2-Acetat bedruckt man mit einer Paste, die 100 Teile der feinverteilten Farbstoffmischung entspr. Beispiel 6, 290 Teile Wasser, 600 Teile einer Verdickung auf Basis Kernmehlether und 10 Teile Triisobutylphosphat enthält. Nach dem Trocknen dämpft man das bedruckte Gewebe mit Sattdampf bei 102 °C während 30 Minuten.

Man erhält einen marineblauen Druck mit sehr guten Naßechtheitseigenschaften und guter Reib- und Stickoxidechtheit.

Patentansprüche

1. Farbstoffmischungen, enthaltend Farbstoffe der Formel

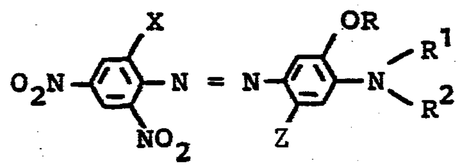

I ,

in der

**X** **Chlor oder Brom,**

Z Wasserstoff, Methyl, Ethyl, $C_1$- bis $C_4$-Alkoxy oder Acetylamino,

R $C_1$- bis $C_4$-Alkyl,

$R^1$ und $R^2$ unabhängig voneinander Allyl, Methallyl oder gegebenenfalls durch Hydroxy, $C_1$- bis $C_4$-Alkoxy oder Alkanoyloxy substituiertes $C_1$- bis $C_6$-Alkyl oder zusammen mit dem Stickstoff Morpholino oder Tetra-, Penta- oder Hexamethylenimino sind und einer der Reste $R^1$ und $R^2$ auch Wasserstoff sein kann.

2. Mischungen gemäß Anspruch 1, enthaltend Farbstoffe der Formel

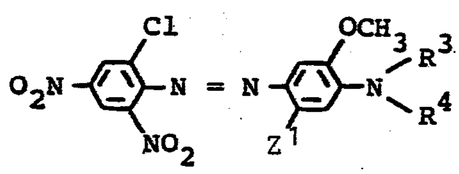

,

in der $R^3$ und $R^4$ Methyl, Ethyl, Hydroxyethyl, Hydroxypropyl, Acetoxyethyl, Acetoxypropyl oder Allyl und $R^4$ darüberhinaus noch Wasserstoff sind und $Z^1$ Methyl, Methoxy, Ethoxy oder Acetylamino bedeutet.

3. Mischungen gemäß Anspruch 1, enthaltend im wesentlichen 2 oder 3 Farbstoffe.